# EUROPÄISCHE PATENTSCHRIFT

(11) **EP 2 392 120 B1**
(45) Veröffentlichungstag und Bekanntmachung des Hinweises auf die Patenterteilung: **12.03.2014**
(21) Anmeldenummer: 10708148.1
(22) Anmeldetag: 27.01.2010
(51) Int. Cl.: H04L 29/08

(54) **VERFAHREN UND SENSORNETZ ZUR MERKMALSAUSWAHL FÜR EINE EREIGNISERKENNUNG**
METHOD AND SENSOR NETWORK FOR ATTRIBUTE SELECTION FOR AN EVENT RECOGNITION
PROCÉDÉ ET RÉSEAU DE CAPTEURS POUR SÉLECTIONNER DES CARACTÉRISTIQUES POUR DÉTECTER UN ÉVÉNEMENT

(30) Priorität: 27.01.2009 DE 102009006560
(43) Veröffentlichungstag der Anmeldung: 07.12.2011
(73) Patentinhaber: Freie Universität Berlin, 14195 Berlin (DE)
(72) Erfinder: WITTENBURG, Georg, 10997 Berlin (DE); DZIENGEL, Norman, 12157 Berlin (DE); WARTENBURGER, Christian, 12613 Berlin (DE)
(74) Vertreter: Müller, Wolfram Hubertus
(86) Internationale Anmeldenummer: PCT/EP2010/050920
(87) Internationale Veröffentlichungsnummer: WO 2010/086325

(56) Entgegenhaltungen:
- WO-A1-2006/047468
- DE-B3-102007 014 650
- Christian Wartenburger: "Diplomarbeit, Experimentelle Analyse verteilter Ereigniserkennung in Sensornetzen; Retrieved from Internet, http://cst.mi.fu-berlin.de/papers/wartenbu rger08experimentelle.pdf" 19. Dezember 2008 (2008-12-19), Freie Uiversität Berlin , Berlin , XP002591497 Kapittel 3 & 4
- WITTENBERG, G., DZIENGEL, N., SCHILLER, J.: "Demo Abstract: in-network Training and Distributed Event Detection in Wireless Sensor Networks" SENSYS '08, RALEIGH, NORTH CARILONA, USA, 5. November 2008 (2008-11-05), - 7. November 2008 (2008-11-07) XP002591498 Retrieved from Internet: http://page.mi.fu-berlin.de/eke/wittenburg 08in-network.pdf

## Beschreibung

Die Erfindung betrifft ein Verfahren und ein Sensornetz zur Merkmalsauswahl für eine Ereigniserkennung.

Drahtlose Sensornetzwerke (Wireless Sensor Networks / WSNs) sind seit etwa 10 Jahren Gegenstand akademischer Forschung. Sie bestehen aus einer Mehrzahl von Sensorknoten, die jeweils mindestens einen Sensor, einen Prozessor, einen Datenspeicher (mit im Verhältnis zu handelsüblichen PCs wenig Speicherplatz), ein Funkmodul und eine Energieversorgung beispielsweise in Form einer Batterie aufweisen. Die einzelnen Sensorknoten nehmen Messdaten aus der Umwelt auf und tauschen diese über Funk untereinander oder mit einer Basisstation aus. Potenzielle Anwendungen von Sensornetzen finden sich im Bereich der Mess- und Überwachungstechnik, wie beispielsweise bei der Erforschung von schwer zugänglichen Gebieten oder der Gebäude- und Anlagenüberwachung.

Bisherige Anwendungen von drahtlosen Sensornetzen basieren zumeist auf einer einfachen Datenübertragung von Messwerten an eine Basisstation zur Auswertung. Dies hat den Nachteil, dass sich durch den Energieaufwand für potenziell viele Übertragungen die Lebensdauer des Sensornetzes verkürzt. Neuere Ansätze versuchen daher, direkt nach der Datenerfassung auf einem oder mehreren Sensorknoten die Daten zu analysieren, um Rückschlüsse auf ein erfasstes Ereignis zu ziehen. Der Umfang der Datenübertragung zwischen den Sensorknoten und/oder zu einer Basisstation wird hierdurch reduziert. Dies wiederum führt zu einem reduzierten Energieverbrauch und damit zu einer längeren Lebensdauer des Sensornetzes.

In Dennis Pfisterer: "Comprehensive Development Support for Wireless Sensor Networks", Inauguraldissertation, Universität zu Lübeck, Technisch-Naturwissenschaftliche Fakultät, Lübeck, Oktober 2007, ist eine Adressvergabe und Gruppenbildung in Sensornetzen beschrieben, bei der Adressen abhängig vom Ausbringungsort eines Sensorknotens vergeben werden, Sensorknoten ihre absolute Position zusammen mit den Messdaten übertragen und Sensorknotengruppen gebildet werden, um u. a. ein hierarchisches Routing zu unterstützen. Es handelt sich dabei um technische Grundlagen für aktuelle Sensornetze.

Die Druckschrift DE 10 2007 026 528 A1 beschreibt ein Verfahren zum Sammeln von Überwachungsdaten von Kommunikationseinrichtungen. Betrachtet wird ein heterogenes Sensornetz, d. h. ein Sensornetz, welches mehrere unterschiedliche Arten von Sensoren auf den einzelnen Sensorknoten umfasst. Es ist eine Optimierung in der Schlüsselverteilung zur sicheren Kommunikation zwischen den Sensorknoten und der Basisstation vorgesehen, die auf einer Gruppierung der Sensorknoten nach Ort und Art des Sensors aufbaut.

Die Definition eines Ereignisses variiert je nach Anwendungsfeld des Sensornetzes und reicht von einem Vulkanausbruch bis zum Erkennen von Fahrzeugen, vgl. etwa Werner-Allen, G. et al.: " Fidelity and Yield in a Volcano Monitoring Sensor Network", Proceedings of the Seventh USENIX Symposium on Operating Systems Design and Implementation, Seattle, USA, November 2006. Zur Erkennung solcher Ereignisse werden gängigerweise Heuristiken wie beispielsweise Schwellwertmessungen oder die Überprüfung der Anzahl der betroffenen Sensorknoten eingesetzt, wodurch allerdings gerade bei komplexeren Ereignissen eine nur eingeschränkte Erkennungsgenauigkeit zu erreichen ist.

In Dziengel, N.: "Verteilte Ereigniserkennung in Sensornetzen", Diplomarbeit, Freie Universität Berlin, Oktober 2007, sowie Dziengel, N. et al.: "Towards Distributed Event Detection in Wireless Sensor Networks", Adjunct Proceedings of the 4th IEEE/ACM International Conference on Distributed Computing in Sensor Systems (DCOSS '08), Santorini Island, Greece, Juni 2008, sind ein Ansatz zur Ereigniserkennung beschrieben, in dem Methoden aus der Mustererkennung zur Anwendung in einem Sensornetz weiterentwickelt werden. Der verfolgte Ansatz sieht eine Mustererkennung auf der Basis von verteilten Informationen vor, die durch die einzelnen Sensorknoten eines Sensornetzes bereitgestellt werden. Das Ziel der Mustererkennung ist dabei dasselbe wie das Ziel jeder Mustererkennung, nämlich eine Eingabe von Rohdaten in der Ausgabe einer abstrakteren Klasse zuzuordnen. Bei der verteilten Ereigniserkennung werden dazu Merkmalsvektoren und/oder Klassifikationsergebnisse zwischen den am Prozess beteiligten Sensorknoten ausgetauscht, wobei jeder Sensorknoten Merkmale zu einem Merkmalsvektor beisteuert.

Entscheidend für die Genauigkeit einer Klassifizierung und damit für die Erkennungsrate ist dabei die Auswahl der aus den Rohdaten zu extrahierenden Merkmale. Die triviale Lösung, alle verfügbaren Merkmale zu verwenden, weist den Nachteil auf, dass unnötig Daten ausgetauscht und in der Klassifizierungsphase verarbeitet werden müssen. Dies führt zu einer verkürzten Lebensdauer des Sensornetzes. Es ist daher erstrebenswert, die für die Klassifizierung verwendeten Merkmale zu reduzieren bzw. zu filtern.

Der vorliegenden Erfindung liegt dementsprechend die Aufgabe zugrunde, ein Verfahren und ein Sensornetz zur Merkmalsauswahl bereitzustellen, die eine Auswahl der für eine Ereigniserkennung bereitzustellenden Merkmale in einer Art und Weise vornehmen, dass zum Einen eine ausreichend genaue Erkennung möglich ist und zum Anderen der Kommunikationsaufwand zwischen den einzelnen Sensorknoten praktikabel bleibt.

Diese Aufgabe wird erfindungsgemäß durch ein Verfahren mit den Merkmalen des Anspruchs 1, ein Sensornetz mit den Merkmalen des Anspruchs 11 und ein Computerprogramm mit den Merkmalen des Anspruchs 15 gelöst. Ausgestaltungen der Erfindung sind in den Unteransprüchen angegeben.

Danach sieht die vorliegende Erfindung eine Merkmalsauswahl vor, die unter Berücksichtigung topologischer Informationen hinsichtlich der Position der einzelnen Sensorknoten im Sensornetz erfolgt. Es werden Informationen zum topologischen Ursprung der Merkmale innerhalb des Sensornetzes bei der Merkmalsauswahl berücksichtigt. Die hierdurch bereitgestellte verbesserte Merkmalsauswahl ermöglicht einen praktikablen Kompromiss zwischen Erkennungsgenauigkeit und Kommunikationsaufwand zwischen den Sensorknoten.

Insbesondere stellt die vorliegende Erfindung ein Verfahren zur Merkmalsauswahl für eine Ereigniserkennung in Sensornetzen zur Verfügung, das in einer Konfigurationsphase die Schritte aufweist:
- Bereitstellen einer Menge von Merkmalen durch Sensorknoten eines Sensornetzes, die ein zu erkennendes Ereignis charakterisieren, zusammen mit Informationen zum topologischen Ursprung der Merkmale innerhalb des Sensornetzes, nämlich zusammen mit topologischen Informationen hinsichtlich der Position der einzelnen Sensorknoten im Sensornetz, und
- Auswählen einer Untermenge aus der Menge der Merkmale, wobei die Auswahl unter Berücksichtigung der topologischen Informationen hinsichtlich der Position der einzelnen Sensorknoten im Sensornetz erfolgt.

In einer Ausführungsphase erfolgt eine Ereigniserkennung zu einem aktuell zu erkennenden Ereignis dann auf der Grundlage lediglich von solchen Merkmalen, die zu einer ausgewählten Untermenge gehören. Dabei erfolgt in der Konfigurationsphase zu einer Vielzahl möglicher zu erkennender Ereignisse eine solche Merkmalsmengenbildung und Merkmalsauswahl.

Weiter ist vorgesehen, dass aus den Merkmalen der zu jedem Ereignis auswählten Merkmalsuntermenge jeweils ein multi-dimensionaler Referenzmerkmalsvektor gebildet wird. In der Ausführungsphase wird ein ermittelter multi-dimensionaler aktueller Merkmalsvektor zur Ereigniserkennung mit diesen Referenzmerkmalsvektoren über ein Abstandsmaß verglichen.

Merkmale, die ein Ereignis charakterisieren, können beispielsweise Histogrammwerte und/oder Minimalwerte und/oder Maximalwerte und/oder Mittelwerte und/oder Steigungswerte für definierte Zeitintervalle und/oder Intensitätsänderungen für definierte Zeitintervalle sein. Solche Klassen oder Typen von Merkmalen werden auch als Merkmalstypen bezeichnet.

Erfindungsgemäß umfasst das Auswählen einer Untermenge eine Gewichtung dahingehend, dass solche Merkmale der Gesamtmenge der bestimmten Merkmale stärker gewichtet werden, die von einem Knoten stammen, der bereits Merkmale zur Auswahl beigesteuert hat. Die Auswahl erfolgt also unter Berücksichtigung des Umstandes, ob von einem bestimmten Sensorknoten bereits andere Merkmale ausgewählt wurden. Eine solche Auswahl ermöglicht zusätzlich eine Reduktion der bei einer Ereigniserkennung involvierten Sensorknoten und damit der notwendigen Datenübertragungsvorgänge.

In einer Ausführungsvariante umfasst das Auswählen einer Untermenge des Weiteren die Vornahme einer Gewichtung dahingehend, dass solche Merkmale der Gesamtmenge der bestimmten Merkmalen stärker gewichtet werden, bei denen entsprechende Merkmale (also Merkmale des gleichen Merkmalstyps) auch von anderen Netzknoten ermittelt sind. Das Auswahlkriterium ist also die mehrfache Verwendung von Merkmalen des gleichen Merkmalstyps durch die einzelnen Sensorknoten. Es erfolgt eine Merkmalsreduktion durch Merkmalstypreduktion. Die verbliebenen Merkmale in der Menge der ausgewählten Merkmale gehören zu insgesamt weniger Merkmalstypen.

In einer weiteren Ausgestaltung ist vorgesehen, dass das Auswählen einer Untermenge die Durchführung eines iterativen Auswahlprozesses auf der Gesamtmenge der bestimmten Merkmale umfasst. Dabei umfasst die Merkmalsauswahl ein Mengensuchverfahren, welches Untermengen zur Findung einer bestmöglichen Menge auswählt. Zur Beurteilung dieser Untermengen wird ein Maß zur Gütebewertung von Merkmalsmengen benötigt. Die Güte einer Merkmalsmenge ist durch die Fähigkeit dieser Menge, zwischen mehreren Klassen genau unterscheiden zu können, gegeben. Das Gütekriterium hängt folglich mit dem Abstand der Merkmalsvektoren der Klassen zusammen, wobei beliebige Abstandsmaße Verwendung finden können. Die Güte einer Merkmalsmenge kann beispielsweise anhand eines Kreuzvalidierungsalgorithmus ermittelt werden.

In einer Ausgestaltung der Erfindung erfolgt das Auswählen einer Untermenge zunächst durch einen iterativen Auswahlprozess auf der Gesamtmenge der bestimmten Merkmale wie beispielsweise einer Kreuzvalidierung und werden die dabei ausgewählten Merkmale dann zusätzlich wie oben beschrieben gewichtet, nämlich a) in Bezug auf solche Merkmale, die auch von anderen Netzknoten ermittelt sind, und/oder b) unter Berücksichtigung des Umstandes, ob von einem bestimmten Sensorknoten bereits andere Merkmale ausgewählt wurden. Die Merkmalsauswahl besteht somit aus einem Auswahlverfahren, mit dem die Gesamtmenge der Merkmale verringert wird, sowie einer Bewertungsfunktion für die auf diese Weise ausgewählten Merkmale, die die Menge der ausgewählten Merkmale weiter reduziert.

In einer Ausgestaltung der Erfindung erfolgt das Bereitstellen einer Menge von Merkmalen, die ein zu erkennendes Ereignis charakterisieren, mittels folgender Schritte während der Konfigurationsphase:
- Bereitstellen einer Mehrzahl von Sensorknoten des Sensornetzes,
- Ausführen eines zu erkennenden Ereignisses,
- an jedem der Sensorknoten Erfassen von Messwerten, die durch das zu erkennende Ereignis ausgelöst werden,
- an jedem der Sensorknoten Bestimmen einer Mehrzahl von Merkmalen, die das Ereignis charakterisieren, aus den Messwerten,
- Bilden der Menge von Merkmalen, die ein zu erkennendes Ereignis charakterisieren, aus der Summe der an den Sensorknoten bestimmten Merkmale.

In einer Ausgestaltung umfasst die Ausführungsphase die Merkmale:
- Bereitstellen der in der Konfigurationsphase ermittelten Referenzmerkmalsvektoren,
- Bereitstellen von Informationen zu einer in der Konfigurationsphase getroffenen Merkmalsauswahl,
- zu einem aktuell zu erkennenden Ereignis Bestimmen lediglich von Merkmalen an allen oder einigen der Sensorknoten, die zu der getroffenen Merkmalsauswahl gehören,
- Darstellen dieser Merkmale als multi-dimensionalen aktuellen Merkmalsvektor, und
- Vornahme einer Klassifikation durch Vergleichen des aktuellen Merkmalsvektors mit den Referenzmerkmalsvektoren.

Gemäß einer weiteren Ausgestaltung der Erfindung sind die Informationen zum topologischen Ursprung der Merkmale in die Netzwerkadressen der Sensorknoten kodiert, z.B. durch relative Koordinaten oder eine fortlaufende Numerierung der Sensorknoten. Dieser Erfindungsaspekt greift somit auf eine in der Adressierung der Knoten kodierte Topologie zurück, um die relative Position der Knoten untereinander zu bestimmen. Aufgezeichnete Merkmale werden mit der Information um diese relative Position kombiniert. Merkmale unterschiedlichen Typs und von unterschiedlichen relativen Positionen spannen in der Trainingsphase somit den größtmöglichen Merkmalsvektorraum auf, auf dem die Merkmalsauswahl stattfindet. Die Information über die relative Position der Knoten bleibt bei der Merkmalsauswahl erhalten.

Die Kodierung erfolgt dabei bezüglich der Ausbreitungscharakteristik des zu erkennenden Ereignisses, d. h. sie ist an die Ausbreitungscharakteristik des zu erkennenden Ereignisses angepasst. Die Nachbarschaftsrelation der Sensorknoten entlang eines Zaunes stellt hierfür lediglich ein Ausführungsbeispiel dar, bei dem sich die gemessene mechanische Schwingung des Zaunes bei einem Ereignis entlang des Zaunes ausbreitet und dabei gedämpft wird. In einem weiteren Ausführungsbeispiel wird die Lage der Knoten in der Ebene in der Adresse kodiert, z.B. mittels relativer Koordinaten am Ausbringungsort oder mittels fortlaufender Nummern bei bekannter Dimensionierung des Sensornetzes (bezüglich der Anzahl der Knoten in Länge und Breite des ausgebrachten Sensornetzes). Bei gleichförmiger Ausbringung lässt sich aus den Adressen wiederum die ortsunabhängige, relative Lage der Knoten untereinander berechnen. Eine derartige Kodierung ist zur Erkennung von Ereignismustern geeignet, die sich physikalisch gleichförmig in der Fläche ausbreiten, z.B. die Temperatur der Abwärme eines Brandherdes. Ebenso kann in einem weiteren Ausführungsbeispiel die Lage der Knoten im Raum in der Adresse, z.B. mittels relativer Koordinaten oder einer fortlaufenden Numerierung, kodiert werden, sodass Ereignismuster mit einer räumlichen Ausbreitung, z.B. die Gaskonzentration um ein Gasleck in einer industriellen Großanlage, erkannt werden können.

Des Weiteren wird darauf hingewiesen, dass eine Gruppierung der Sensorknoten gemäß eines traditionellen Clusterings nicht stattfindet. Vielmehr ergibt sich die Menge der Sensorknoten, die ein Ereignis bearbeiten, dynamisch während des Ablaufes der Mustererkennung aus der Menge der zuvor ausgewählten Merkmale und der relativen Lage der Sensorknoten zueinander.

Die Erfindung betrifft des weiteren ein Sensornetz mit einer Mehrzahl von Sensorknoten, wobei das Sensornetz zur Durchführung einer Konfigurationsphase und zur Durchführung einer Ausführungsphase konfigurierbar ist. In der Konfigurationsphase ist das Sensornetz dazu konfiguriert:
- eine Menge von Merkmalen durch die Sensorknoten des Sensornetzes bereitzustellen, die ein zu erkennendes Ereignis charakterisieren, zusammen mit Informationen zum topologischen Ursprung der Merkmale innerhalb des Sensornetzes, und
- eine Untermenge aus der Menge der Merkmale auszuwählen, wobei die Auswahl unter Berücksichtigung der Informationen zum topologischen Ursprung der Merkmale erfolgt.
In der Ausführungsphase ist das Sensornetz dazu konfiguriert, eine Ereigniserkennung zu einem aktuell zu erkennenden Ereignis auf der Grundlage von Merkmalen vorzunehmen, die zu einer ausgewählten Untermenge gehören.

Die Erfindung wird nachfolgend unter Bezugnahme auf die Figuren der Zeichnungen anhand eines Ausführungsbeispiels näher erläutert. Es zeigen:
- Figur 1: schematisch ein mittels einer Mehrzahl von Sensorknoten eines Sensornetzes überwachtes Objekt, bei dem es sich um einen Zaun handelt, wobei an jedem Gitterstab einer der Sensorknoten befestigt ist,
- Figur 2: ein Histogramm, in dem durch einen Sensorknoten ermittelte Beschleunigungsmesswerte dargestellt sind,
- Figur 3: schematische ein Darstellung einererfindungsgemäßen Merkmalsauswahl,
- Figur 4: eine schematische Darstellung einer Kreuzvalidierung und
- Figur 5: einen Informationsaustausch zwischen einer Basisstation und einem Sensorknoten nach Abschluss der Konfigurationsphase.

Die erfindungsgemäße Merkmalsauswahl wird im Folgenden anhand eines Systems zur Überwachung eines Zauns illustriert. Die Aufgabe des Systems ist es dabei, sicherheitsrelevante Ereignisse wie beispielsweise das Überklettern des Zauns durch eine Person zu erkennen und anzuzeigen. Dabei kann vorgesehen sein, verschiedene Typen von Ereignissen wie z.B. die Ereignisse "gegen den Zaun lehnen", "Schütteln des Zaunes", "am Zaun hoch klettern zum darüber sehen" und "über den Zaun klettern" an verschiedenen Zaunabschnitten zu erkennen und zu differenzieren.

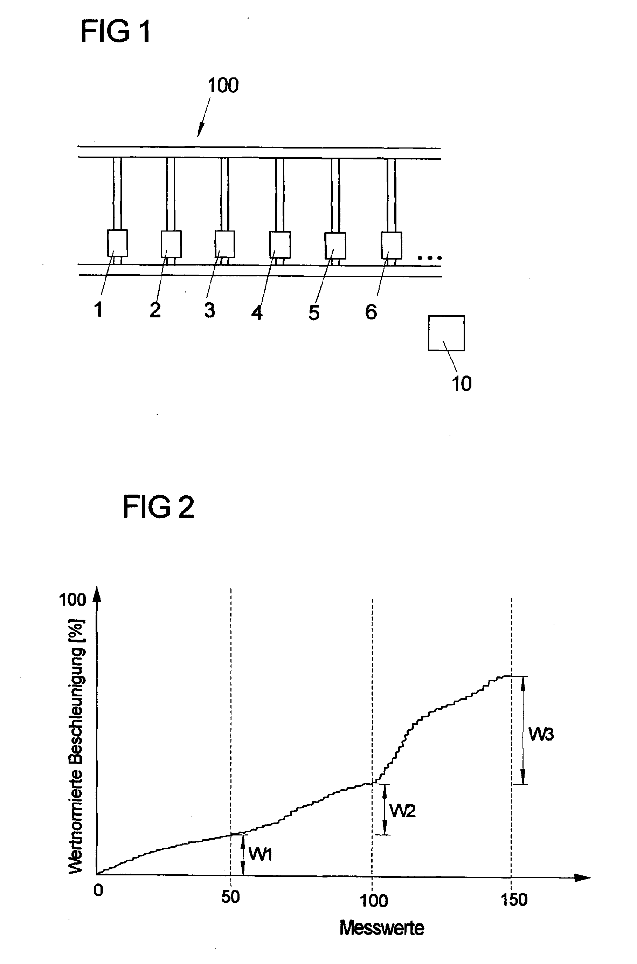

Gemäß der Figur 1 ist ein Zaun 100 vorgesehen, der eine Mehrzahl von Gitterstäben umfasst. An jedem der Gitterstäbe ist ein Sensorknoten 1, 2, 3, 4, 5, 6... angeordnet. Die einzelnen Sensorknoten 1-6 weisen jeweils einen Beschleunigungssensor, einen Prozessor, einen Datenspeicher, ein Funkmodul und eine Energieversorgung beispielsweise in Form einer Batterie auf. Derartige Sensoren sind an sich bekannt und beispielsweise in Dziengel, N.: "Verteilte Ereigniserkennung in Sensornetzen", Diplomarbeit, Freie Universität Berlin, Oktober 2007, in Abschnitt 3.1 beschrieben. Die Sensorknoten 1-6 tauschen über Funk untereinander und mit einer Basisstation 10 Daten aus. Die Sensorknoten 1-6 und die Basisstation 10 bilden dabei ein Sensornetz.

Die Beschleunigungssensoren der Netzknoten 1-6 messen die Bewegungen des Zaunes 100, die bei unterschiedlichen Ereignissen wie beispielsweise Klettern oder Rütteln auftreten, und teilen die erkannten Ereignisse per Funk der Basisstation 10 mit.

Dabei ist die Lage der Sensorknoten 1-6 eines Zaunabschnitts untereinander in die Netzwerkadressen der Sensorknoten kodiert. Wählt man für die Netzwerkadressen Elemente der Menge der natürlichen Zahlen und nummeriert man, wie vorliegend, die Sensorknoten ihrer Position am Zaun 100 gemäß fortlaufend, so ergibt sich aus der Vorgänger- bzw. Nachfolgerfunktion die Nachbarschaftsinformation eines Sensorknotens. Beispielsweise ist der Knoten mit der Adresse 4 links durch den Knoten 3 und rechts durch den Knoten 5 benachbart. Diese Art der Kodierung der Lage der Sensorknoten 1-6 untereinander ist möglich, weil sie den physikalischen Eigenschaften des zu messenden Ereignisses entspricht. Die Bewegung, die durch ein Ereignis an einer bestimmten Stelle des Zaunes 100 auftritt, pflanzt sich durch die mechanische Kopplung der Zaunelemente fort und ist in gedämpfter Form auch an den benachbarten Zaunelementen zu messen. Es besteht also ein direkter semantischer Bezug zwischen der physikalischen Nähe im zu beobachtenden Objekt und der im Sensornetz über die Adressen hinterlegten topologischen Informationen.

Grundsätzlich kann die Kodierung der topologischen Informationen jedoch auch in anderer Weise erfolgen. So kann das System beispielsweise um eine Konfigurationskomponente erweitert werden, mit der es dem Anwender möglich ist, die Lage der Knoten untereinander explizit festzulegen, beispielsweise durch die Festlegung von Raumkoordinaten zu jedem Sensorknoten.

Wichtig hierbei ist, dass die Kodierung bezüglich der Ausbreitungscharakteristik des zu erkennenden Ereignisses erfolgt. Für mechanisch übertragene Bewegungen wie z.B. an einem Zaun eignet sich beispielsweise die Nachbarschaftsrelation der Sensorknoten; für das sich gleichmäßige ausbreitende Temperaturgefälle im Umkreis eines Feuers eignen sich beispielsweise die Raumkoordinaten der Sensorknoten.

Das Sensornetz ist zur Durchführung einer Konfigurationsphase und zur Durchführung einer Ausführungsphase konfiguriert. In der Konfigurationsphase erfolgt die Merkmalsauswahl. Dabei werden die wie nachfolgend beschrieben auf den einzelnen Sensorknoten 1-6 extrahierten Merkmale von der Basisstation 10 als zentraler Systemkomponente ausgewertet. Die zentrale Systemkomponente 10 nimmt dabei eine Merkmalsauswahl vor und bildet Referenzmerkmalsvektoren, die jeweils definierte Ereignisse charakterisieren. Nach Abschluss der Konfigurationsphase werden für die Ausführungsphase diese Referenzmerkmalsvektoren zusammen mit weiteren Informationen von der Basisstation 10 an die einzelnen Sensorknoten 1-6 übertragen. In der Ausführungsphase erfolgt dann eine verteilte Mustererkennung allein auf den Sensorknoten 1-6, ohne die Involvierung der zentralen Systemkomponente 10.

Beim Training des Sensornetzes am Zaun 100 während der Konfigurationsphase gilt es, eine Merkmalsauswahl zu treffen, die die spätere Erkennungsgenauigkeit optimiert, und zwar sowohl in Bezug auf die korrekte Klassifikation der Ereignisse, als auch bezüglich einer Fehlertoleranz gegenüber unzuverlässigem Datenaustausch zwischen den Knoten und bezüglich der Energieeffizienz. Zu diesem Zweck werden bei der Merkmalsauswahl aus einer Menge von verfügbaren Merkmalen die am besten geeigneten Merkmale für die spätere Muster- und Ereigniserkennung ausgewählt.

Mögliche Merkmale, die die Gesamtmenge der an den Sensorknoten 1-6 aus den Rohdaten bestimmten Merkmale bilden, aus der dann erfindungsgemäß eine Untermenge ausgewählt wird, sind Histogrammwerte, Minimalwerte und Maximalwerte beispielsweise der Beschleunigung, Mittelwerte, Steigungswerte in definierten Zeitintervallen und/oder Intensitätsänderungen in definierten Zeitintervallen. Weitere mögliche Merkmale sind in der WO 2007/135662 A1 beschrieben.

Ein Beispiel für eine Merkmalsbestimmung wird nachfolgend anhand der Figur 2 erläutert. Die Merkmalsbestimmung der Figur 2 erfolgt anhand von Histogrammwerten. Dabei wird davon ausgegangen, dass jeder der Sensorknoten 1-6 einen Beschleunigungssensor umfasst. Während der Konfigurationsphase extrahiert jeder Sensorknoten 1-6 bei Auftreten eines Ereignisses drei Merkmale pro Raumachse aus den jeweils gemessenen Beschleunigungsdaten.

Jeder Sensorknoten 1-6 bestimmt fortlaufend die aktuellen Beschleunigungswerte für alle drei Raumrichtungen und gibt hierzu fortlaufend während der Bewegung Beschleunigungsmesswerte aus, die nachfolgend auch als Samples bezeichnet werden, da sie jeweils einen Abtastwert der aktuellen Beschleunigung darstellen. Beispielsweise werden während einer Zeiteinheit von 1 Sekunde eine bestimmte Anzahl von Messwerten bzw. Samples bereitgestellt. Die einzelnen Beschleunigungsmesswerte einer Raumrichtung (x, y, z) werden in einem Histogramm gemäß der Figur 2 dargestellt. Das Histogramm weist dabei k Histogrammklassen auf, wobei k eine natürliche Zahl ≥ 1 und gleich der Anzahl der Merkmale pro Achse ist, die aus den Messwerten abgeleitet werden.

Die Messwerte werden zunächst auf ein einheitliches Zeit- und Wertmaß normiert, um die Beschleunigungsmessungen verschiedener Ereignisse vergleichbar zu machen. Beispielsweise wird eine lineare Normierung verwendet, die die Ereignisse einheitlich auf 4 Sekunden Ereignisdauer abbildet und die Intensität bei einem im Training ermittelten Maximalausschlag normiert.

Jedes der entsprechend normierten Samples wird nun in eine der Histogrammklassen einsortiert. Die Anzahl der Samples pro Klasse ist dabei auf 1/k der erfassten Messwerte begrenzt. Es werden die kleinsten Messwerte, also die Messwerte mit den kleinsten Beschleunigungswerten, solange in die erste Klasse einsortiert, bis diese Klasse gefüllt ist. In dem Ausführungsbeispiel der Figur 2 fallen die ersten 50 Samples in die erste Klasse. Im Folgenden werden die übrigen k-1-Klassen aufgefüllt, im Ausführungsbeispiel der Figur 2 also die zweite Histogrammklasse mit den Samples 50 bis 100 und die dritte Histogrammklasse mit den Samples 100 bis 150. Jedes Samples wird also einer der k Klassen zugeordnet.

In einem nächsten Schritt wird für jede Histogrammklasse die Streuweite der dort gesammelten Daten betrachtet und hierzu beispielsweise die Differenz zwischen dem Maximalwert und dem Minimalwert in der entsprechenden Klasse ermittelt. Die so erzeugten Differenzen bilden geeignete Merkmale für die Vektorbildung. Sie lassen sich dabei mit den Differenzen anderer Muster vergleichen, wenn sie aus der gleichen Histogrammklasse stammen. Ein Vorteil dieser Art der Merkmalsbestimmung besteht darin, dass die Histogrammklassen immer die gleiche Anzahl von Samples enthalten, so dass insbesondere nicht die Gefahr besteht, dass eine Histogrammklasse keine Elemente enthält. Auch ist die Klassengröße variierbar.

In der Klasse 1 der Figur 2 ist die Streuweite als W1, in der Klasse 2 als W2 und der Klasse 3 als W3 angegeben. Damit sind drei Merkmale W1, W2, W3 gefunden, die die durchgeführte Bewegung charakterisieren. Somit liegen für die betrachtete Raumrichtung drei Merkmale W1, W2, W3 vor, die einen dreielementigen Merkmalsvektor bilden.

Für die drei betrachteten Raumrichtungen liegt damit ein neunelementiger Merkmalsvektor pro Sensorknoten 1-6 vor.

Ein Merkmalstyp kennzeichnet einander entsprechende Merkmale der einzelnen Sensorknoten 1-6. Der Begriff bezeichnet Typen von Merkmalen, die an jedem oder zumindest mehreren der Sensorknoten vorkommen, während der Begriff "Merkmal" den Vertreter des Merkmalstyps an einem bestimmten Sensorknoten bezeichnet. Im Fall der Figur 2 beispielsweise ist ein Merkmalstyp durch die Ableitung eines Merkmals aus einer n-ten Histogrammklasse definiert, d.h. in Falle der Figur 2 gehört das Merkmal W1 dem Merkmalstyp "erste Histogrammklasse" an, das Merkmal W2 dem Merkmalstyp "zweite Histogrammklasse" an, usw.

Es wird nochmals darauf hingewiesen, dass statt Histogrammwerten auch andere typische Merkmale/Merkmalstypen einer Bewegung wie beispielsweise die Dauer einer Bewegung, minimale Beschleunigungswerte, maximale Beschleunigungswerte oder durchschnittliche Beschleunigungswerte zur Bildung der Merkmale herangezogen werden können. Auch können, wenn Histogrammwerte ausgewertet werden, diese in anderer Weise als in Bezug auf die Figur 2 beschrieben zur Bildung von Merkmalen ausgewertet werden. Beispielsweise kann alternativ vorgesehen sein, dass den einzelnen Histogrammklassen bestimmten Beschleunigungsbereiche entsprechen und die Anzahl der in einen Beschleunigungsbereich fallenden Samples das ausgewertete Merkmal darstellt. Auch ist die in der Figur 2 angegebene Anzahl der Merkmale pro Raumachse natürlich nur beispielhaft zu verstehen.

Würden nun sämtliche der gemäß dem Ausführungsbeispiel der Figur 2 neun Merkmale jedes Sensorknoten 1-6 bei der durchzuführenden verteilten Mustererkennung bzw. Klassifikation berücksichtigt, läge eine insgesamt zu große Anzahl von Merkmalen vor, was zu den bereits erwähnten Nachteilen führte. Es erfolgt daher eine Merkmalsauswahl.

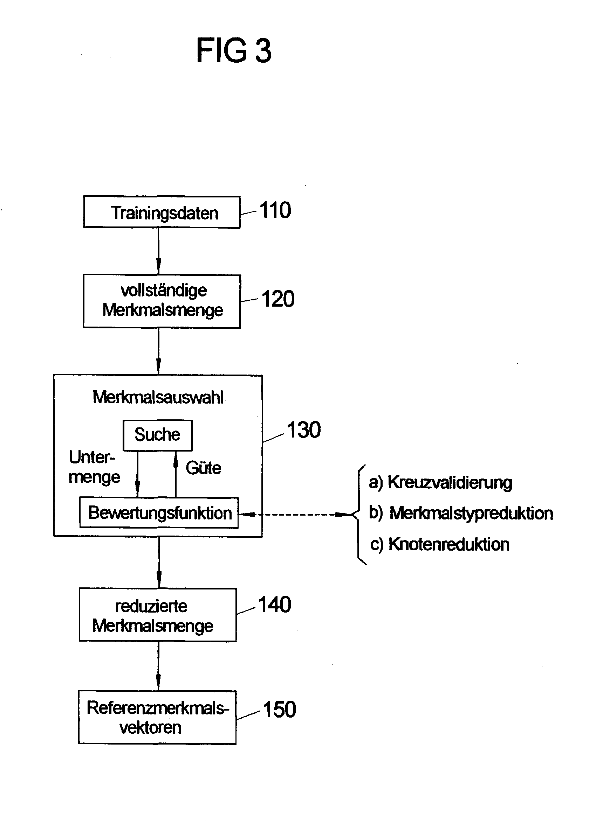

Die Merkmalsauswahl ist schematisch in der Figur 3 dargestellt. Zunächst werden in Schritt 110 für ein bestimmtes Ereignis die Rohdaten an allen Sensorknoten 1-6 erfasst. Da die Konfigurationsphase vorliegt, werden die Rohdaten auch als Trainingsdaten bezeichnet. Anschließend bestimmen sämtliche Sensorknoten 1-6 aus den Trainingsdaten nach definierten Regeln bestimmte Merkmale, wie beispielhaft anhand der Figur 2 beschrieben. Die durch jeden Sensorknoten 1-6 bestimmten Merkmale werden an die Basisstation 10 übertragen, so dass dieser die vollständige Merkmalsmenge 120 vorliegt.

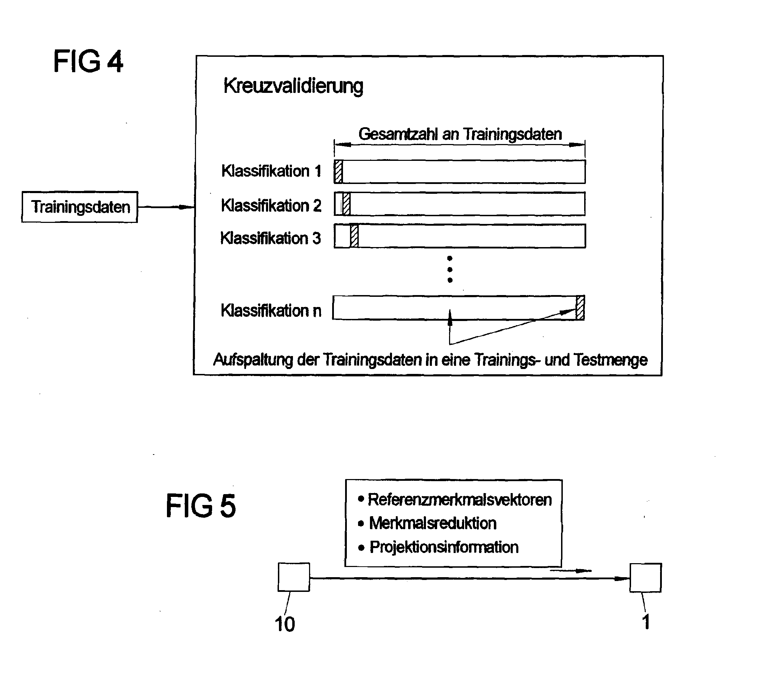

Es erfolgt nun die Merkmalsauswahl 130. Dabei erfolgt eine gleitende, iterative Suche, unter Verwendung einer in der Figur 4 schematisch dargestellten Kreuzvalidierung als Bewertungsfunktion. Eine derartige Kreuzvalidierung ist beispielsweise aus Gutierrez-Osuna, Ricardo: "Lecture on "Intelligent Sensor Systems"", Write State University, bekannt, so dass ihre Durchführung hier nicht im einzelnen beschrieben wird. Allgemein besteht die Grundidee der Kreuzvalidierung darin, dass die vorhandenen Daten in eine Trainings- und eine Testmenge aufgespalten werden. Ein Klassifikator wird anhand der Trainingsmenge erstellt. Die Fehlerrate wird anhand der unabhängigen Testmenge berechnet, welche nicht für das Training verwendet wurde. Es werden bei der Kreuzvalidierung aus der Gesamtmenge der verfügbaren Merkmale somit mehrfach Untermengen ausgewählt und die entsprechenden Mengen miteinander verglichen. Die Merkmalsauswahl erfolgt anhand des durchschnittlichen Fehlers aller Klassifikationen bzw. Untermengen. Grundsätzlich kann statt einer Kreuzvalidierung auch eine andere Gewichtungsfunktion gewählt werden.

Die ermittelte Güte wird nun zusätzlich anhand von Informationen zum topologischen Ursprung der Merkmale des Sensornetzes gewichtet, um eine auf den Anwendungsfall abgestimmte reduzierte Merkmalsmenge zu erreichen. So wird der Beitrag eines Merkmals zur Erkennungsrate mit zwei zusätzlichen Kriterien gewichtet.

Zum einen handelt es sich um das Kriterium, wie oft das fragliche Merkmal (d.h. ein Merkmal des gleichen Merkmalstyps wie z.B. "erste Histogrammklasse" oder "Dauer des Ereignisses") von einem anderen Knoten schon verwendet wurde. Dabei gilt, dass eine häufigere Verwendung für ein größeres Gewicht des Merkmals steht. Mit diesem Kriterium wird erreicht, dass bei der Optimierung eher keine selten berücksichtigten Merkmalstypen verwendet werden und solche bei der Berechnung und Übertragung wegfallen können.

Zum anderen wird das Kriterium eingesetzt, wie viele andere Merkmale (also Merkmale anderer Merkmalstypen) ein Knoten schon beigesteuert hat. Merkmale von häufig verwendeten Knoten besitzen hierbei ein höheres Gewicht. Mit diesem Kriterium wird erreicht, dass bei der Erkennung eher auf wenige Knoten zurückgegriffen wird und daher die Anfälligkeit der Ereigniserkennung gegenüber Übertragungsfehlern verbessert sowie der benötigte Energieverbrauch für Übertragungswiederholungen reduziert wird. Dabei ist zu berücksichtigen, dass eine Funkübertragung potentiell fehleranfällig ist und es grundsätzlich erstrebenswert ist, mit so wenig Einzeldaten wie möglich zu arbeiten und somit die Anzahl der Gesamtknoten, die Informationen zur verteilten Ereigniserkennung beisteuern, zu minimieren.

In beiden Fällen werden topolgische Informationen über den Ursprungsort der Merkmale innerhalb des Netzwerkes ausgewertet. Im ersten Fall impliziert die Frage, ob ein fragliches Merkmal bereits von einem anderen Knoten verwendet wurde, die Zuordenbarkeit eines Merkmals zu einem Knoten und daher die Information über den Ursprungsort des Merkmals innerhalb des Netzwerkes. Im zweiten Fall impliziert die Frage, wie viele Merkmale ein Knoten schon beigesteuert hat, ebenfalls die Zuordenbarkeit der Merkmale jeweils zu einem Knoten. Die topologischen Informationen gehen somit in beide Kriterien ein.

Die Gewichtung der Güte einer konkreten Merkmalsauswahl aus der Kreuzvalidierung benötigt genau diese Information. Während in einer gängigen Merkmalsauswahl die Merkmale allein anhand ihres Typs (z.B. "Dauer") betrachtet werden, basiert das erfindungsgemäße Verfahren und Sensornetz auf Typ und Ursprungsort (z.B. die Dauer eines Trainingsereignisses auf einem bestimmten Sensorknoten).

Das Ergebnis der Kreuzvalidierung ist zunächst die Erkennungsgenauigkeit für eine gegebene Merkmalsauswahl. Diese Metrik wird unter Berücksichtigung der konkret ausgewählten Merkmale mit Koeffizienten, die sich aus den zwei zusätzlichen Kriterien ergeben und z.B. abhängig von der technischen Umsetzung der Sensorknoten und des Ausbringungsorts zu bestimmen sind, gewichtet.

Konkret bedeutet dies beim betrachteten Ausführungsbeispiel, dass der verwendete Algorithmus versucht, eher Merkmale zu verwenden, die unabhängig von der Knotenlage relativ zum Ort des Ereignisses relevant für die Klassifizierung sind. Findet ein Ereignis beispielsweise bei Knoten 5 statt und stellt sich sowohl bei Knoten 5 als auch beim Nachbarknoten 4 das Merkmal der maximalen Amplitude als relevant zur Klassifizierung heraus, so wird dieses Merkmal eher ausgewählt als das Merkmal der zeitlichen Dauer des Ereignisses, das lediglich auf Knoten 5 für relevant erachtet wurde. Da folglich auf den Merkmalstyp der zeitlichen Dauer des Ereignisses komplett verzichtet werden kann, reduziert sich das Datenvolumen im Sensornetz insgesamt.

Zusätzlich wird bei der Auswahl berücksichtigt, wie viele Merkmale ein Knoten in einer bestimmten relativen Lage zum Ort des Ereignisses bereits zur Erkennung beigesteuert hat. Merkmale von Knoten, die bereits Merkmale beigesteuert haben, werden eher ausgewählt als Merkmale von Knoten, von denen nach dem bisherigen Fortschritt der Auswahl noch keine Merkmale ausgewählt wurden. Konkret wird also vom benachbarten Knoten 4 das Merkmal der maximalen Amplitude eher ausgewählt als das eventuell relevantere Merkmal der maximalen Amplitude vom benachbarten Knoten 6, falls von Knoten 4 bereits andere Merkmale ausgewählt wurden. Je weniger Knoten notwendig sind, um ein Ereignis eindeutig zu beschreiben, desto stärker reduziert sich die Anfälligkeit der verteilten Ereigniserkennung gegenüber Paketverlusten.

Insbesondere kann die Merkmalsauswahl dazu führen, dass nur bestimmte Merkmalstypen für die Klassifizierung verwendet werden. Ein Merkmalstyp kennzeichnet wie bereits erläutert einander entsprechende Merkmale der einzelnen Sensorknoten.

Die Gewichtung der beiden zusätzlichen Kriterien hängt beispielsweise von den Energiekosten der Datenauswertung und -übertragung der Sensorknoten und von der szenarioabhängigen Fehlerwahrscheinlichkeit der Datenübertragung ab. Ist beispielsweise die Datenauswertung und -übertragung sehr teuer (z.B. weil die Rechenkapazität der Sensorknoten stark beschränkt ist oder die Sensorknoten weit von einander entfernt ausgebracht werden), dann könnten im Extremfall nur Merkmale eines einzigen Merkmalstyps verwendet werden. Ist beispielsweise die Fehlerwahrscheinlichkeit (aufgrund der Radiointerferenzen der im Baubetrieb eingesetzten Maschinen) sehr hoch, dann könnte im Extremfall nur ein Sensorknoten an der Ereigniserkennung teilnehmen (wodurch keine Funkübertragung mehr nötig wäre).

Die Merkmalsreduktion erfolgt zusammengefasst auf der Grundlage von drei Maßnahmen, nämlich a) einer Gewichtung wie z.B. einer an sich bekannten Kreuzvalidierung, b) dem Einsatz topologischer Informationen zur Merkmalsreduktion durch Merkmalstypreduktion und c) dem Einsatz topologischer Informationen zur Merkmalsreduktion durch Knotenreduktion, wie in Schritt 130 schematisch dargestellt. Dabei wird darauf hingewiesen, dass Maßnahmen b) und c) nicht beide realisiert werden müssen, sondern es ebenso im Rahmen der vorliegenden Erfindung liegt, wenn nur eine dieser Maßnahmen realisiert wird.

Nach Abschluss der Merkmalsreduktion liegt eine reduzierte Merkmalsmenge 140 vor. Über einer Mittelwertbildung der Trainingswerte der ausgewählten Merkmale der reduzierten Merkmalsmenge werden dann die Prototypen der Klassen, d.h. der zu erkennenden Ereignisse gebildet. Dabei werden beispielsweise Referenzmerkmalsvektoren 150 gebildet, die mehrelementige Vektoren eines multidimensionalen Vektorraums darstellen, die die verbliebenen Merkmale aller Sensorknoten als Vektorelemente enthalten. In der Konfigurationsphase werden für eine Vielzahl möglicher Ereignisse solche Referenzmerkmalsvektoren gebildet, beispielsweise für die Ereignisse, dass bei dem ersten, zweiten, dritten, etc. Zaunpfosten der Figur 1 eine Person den Zaun zu übersteigen sucht, gegen ihn tritt, an ihm rüttelt, etc.

Nach Abschluss des Trainings werden für die Ausführungsphase gemäß der Figur 5 in einer Ausführungsvariante zusätzlich zu den ermittelten Referenzmerkmalsvektoren für die einzelnen Ereignisse zusätzlich folgende Informationen von der Basisstation 10 an alle Sensorknoten 1-6 übermittelt.

Zum einen werden Informationen zur Merkmalsreduktion an die Knoten übertragen. So wird die Menge der Merkmale, die unabhängig von der relativen Lage der Knoten in den Referenzmerkmalsvektoren verwendet werden, an die Sensorknoten 1-6 übertragen. Alle sonstigen Merkmale sind für die Ereigniserkennung irrelevant und werden zukünftig weder berechnet noch verschickt. In der Implementierung kann dies beispielsweise durch eine Bitmaske realisiert werden.

Der Referenzmerkmalsvektor einer jeden Klasse setzt sich dabei aus Merkmalen unterschiedlichen Typs von unterschiedlichen Knoten zusammen. Merkmale, die unabhängig von der relativen Lage der Knoten in den Referenzmerkmalsvektoren verwendet werden, sind solche, deren Typ im Rerenzmerkmalsvektor vorkommt, egal von welchem Knoten sie stammen. In der Anwendungsphase weiss man nicht a priori, an welcher Stelle ein Ereignis auftreten wird. Daher müssen alle Knoten alle Merkmalstypen unabhängig von ihrer Lage liefern.

Zum anderen werden Projektionsinformationen an die Knoten übertragen. So werden für jeden im Referenzvektor vertretenen Sensorknoten Informationen zu einer von der relativen Lage des Knotens abhängigen Projektion vom Merkmalsvektorraum in den Referenzmerkmalsvektorraum übertragen. Hiermit wird der Tatsache Rechnung getragen, dass die durch die Merkmalsauswahl gegebene Struktur des Referenzmerkmalsvektors vor jeder Klassifizierung berücksichtigt werden muss. In der Implementierung kann dies über ein zweidimensionales Array realisiert werden, dessen Indizes Lage und Merkmal kodieren und dessen Elemente für die Dimension im Referenzmerkmalsvektorraum stehen.

Die relative Lage ergibt sich im Anwendungsbeispiel aus den Adressen der Knoten. Hat beispielsweise in der Trainingsphase bei einem Ereignis an Knoten 5 der linke Nachbar Knoten 4 ein sehr brauchbares Merkmal geliefert, so ist es in der Anwendungsphase nötig, dass alle Knoten stets auf eben jenes Merkmal von ihrem linken Nachbarn achten. Wie oben ausgeführt, es ist unbekannt, an welcher Stelle das Ereignis auftreten wird. Die Projektion sorgt dafür, dass jeweils das in diesem Beispiel relevante Merkmal vom linken Nachbarn (unabhängig von dessen tatsächlicher Adresse) auf die selbe Achse der Referenzmerkmalsvektorraums abgebildet wird.

Bei einer aktuellen Ereigniserkennung während der Ausführungsphase werden an den genutzten Sensorknoten nur noch die als relevant markierten Merkmale aus den Rohdaten extrahiert und im Merkmalsvektor des jeweiligen Sensorknotens an die anderen Sensorknoten übertragen. Die empfangenen Merkmalsvektoren werden dann unter Berücksichtigung der lageabhängigen Projektion zu einem aktuellen Merkmalsvektor kombiniert und erst dann mit dem Referenzmerkmalsvektor verglichen, etwa durch Bilden des euklidischen Abstandes. Der Vergleich führt zu einer Klassifikation des Ereignisses und damit zu einer Ereigniserkennung.

Die Ereigniserkennung während der Ausführungsphase kann dabei allein auf den Sensorknoten 1-6, ohne Involvierung der Basisstation 10 erfolgen. Diese ist nur zur Vornahme der relativ aufwendigen Berechnungen zur Merkmalsreduktion während der Konfigurationsphase erforderlich.

Das erfindungsgemäße Verfahren ist ein Beispiel für eine verteilte Ereigniserkennung, bei der mehrere Sensorknoten in die Entscheidungsfindung einbezogen werden, um eine höhere Erkennungsgenauigkeit zu erlangen. Ereignisse, die in dem Sensornetz auftreten, werden dabei als Muster interpretiert.

Das erfindungsgemäße Verfahren reduziert die für die verteilte Ereigniserkennung notwendigen Daten bereits im Erkennungsprozess, indem bei der Bildung von Merkmalen aus den Rohdaten an den einzelnen Sensorknoten 1-6 bestimmte Merkmale von vornherein ausgelassen und nicht gebildet werden. Damit wird der Energieverbrauch des Sensornetzes durch Einsparung von Funkübertragungen und Rechenoperationen reduziert. Die erfindungsgemäße Lösung reduziert ein einer Ausgestaltung zusätzlich oder alternativ die Anzahl der an der Ereigniserkennung beteiligten Knoten und erhöht somit die Zuverlässigkeit des Verfahrens, da weniger Datenübertragungsprobleme auftreten können. Weiter steigert die erfindungsgemäße Lösung als Nebeneffekt die Genauigkeit der Ereigniserkennung, da es die Dimensionalität des Referenzmerkmalsvektorraums beschränkt und somit Vergleiche zwischen Referenz- und Merkmalsvektoren aussagekräftiger ermöglicht.

Die erfindungsgemäße Lösung beschränkt sich nicht auf die vorstehend beschriebenen Ausführungsbeispiele, die lediglich beispielhaft zu verstehen sind. Insbesondere stellt die Erkennung sicherheitsrelevanter Ereignisse an einem Zaun, bei dem die Sensorknoten im Wesentlichen entlang einer Raumachse angeordnet sind, nur ein Anwendungsbeispiel dar. Das Verfahren kann ebenso in komplexeren zwei- und dreidimensionalen Systemen eingesetzt werden. Ein Ausführungsbeispiel eines zweidimensionalen Falles ist ein System zur Überwachung von Arealen, wie beispielsweise von Waldgebieten. Ein typisches, sicherheitsrelevantes Ereignis wäre in diesem Kontext der Ausbruch eines Brandes, der durch die Erkennung des punktuellen Temperaturanstieg zu identifizieren wäre. Ein Ausführungsbeispiel eines dreidimensionalen Falles betrifft ein System zur Überwachung von industriellen Großanlagen. Das Verfahren dient beispielsweise dazu, das Ereignis von lokal austretenden Gasen über die Veränderung der Gaskonzentration an den Messpunkten im Raum zu erkennen. Eine solche Erkennung kann dazu verwendet werden, Gaslecks oder dergleichen in Anlagen zu identifizieren.

## Patentansprüche

1. Verfahren zur Merkmalsauswahl für eine Ereigniserkennung in Sensornetzen, mit den Schritten:
- in einer Konfigurationsphase,
o Bereitstellen einer Menge (120) von Merkmalen durch Sensorknoten (1-6) eines Sensornetzes, die ein zu erkennendes Ereignis charakterisieren, zusammen mit topologischen Informationen hinsichtlich der Position der einzelnen Sensorknoten (1-6) im Sensornetz, und
o Auswählen (130) einer Untermenge aus der Menge (120) der Merkmale, wobei die Auswahl unter Berücksichtigung der genannten topologischen Informationen hinsichtlich der Position der einzelnen Sensorknoten (1-6) im Sensornetz erfolgt, wobei die Auswahl eine Gewichtung dahingehend umfasst, dass solche Merkmale der Menge (120) der Merkmale stärker gewichtet werden, die von einem Sensorknoten (1-6) stammen, der bereits andere Merkmale zur Auswahl beigesteuert hat, wobei zu der ausgewählten Untermenge durch eine reduzierte Anzahl von Sensorknoten (1-6) Merkmale bereitgestellt werden,
- in einer Ausführungsphase,
o Vornahme einer Ereigniserkennung zu einem aktuell zu erkennenden Ereignis auf der Grundlage von Merkmalen, die zu einer ausgewählten Untermenge gehören.

2. Verfahren nach Anspruch 1, **dadurch gekennzeichnet, dass** das Auswählen (130) einer Untermenge die Vornahme einer Gewichtung dahingehend umfasst, dass solche Merkmale der Gesamtmenge der bestimmten Merkmalen stärker gewichtet werden, bei denen entsprechende Merkmale auch von anderen Netzknoten (1-6) ermittelt sind.

3. Verfahren nach Anspruch 1 oder 2, **dadurch gekennzeichnet, dass** bei der Auswahl einer Untermenge berücksichtigt wird, wie viele Merkmale ein Sensorknoten (1-6) in einer bestimmten relativen Lage zum Ort des Ereignisses bereits zur Erkennung beigesteuert hat.

4. Verfahren nach einem der vorangehenden Ansprüche, **dadurch gekennzeichnet, dass** das Auswählen (130) einer Untermenge die Durchführung eines iterativen Auswahlprozesses auf der Gesamtmenge der bestimmten Merkmale umfasst.

5. Verfahren nach einem der vorangehenden Ansprüche, **dadurch gekennzeichnet, dass** das Bereitstellen einer Menge (120) von Merkmalen, die ein zu erkennendes Ereignis charakterisieren, folgende Schritte innerhalb der Konfigurationsphase umfasst:
- Bereitstellen einer Mehrzahl von Sensorknoten (1-6) des Sensornetzes,
- Ausführen eines zu erkennenden Ereignisses,
- an jedem der Sensorknoten (1-6) Erfassen von Messwerten (130), die durch das zu erkennende Ereignis ausgelöst werden,
- an jedem der Sensorknoten (1-6) Bestimmen einer Mehrzahl von Merkmalen, die das Ereignis charakterisieren, aus den Messwerten,
- Bilden der Menge (120) von Merkmalen, die ein zu erkennendes Ereignis charakterisieren, aus der Summe der an den Sensorknoten (1-6) bestimmten Merkmale.

6. Verfahren nach einem der vorangehenden Ansprüche, **dadurch gekennzeichnet, dass** in der Konfigurationsphase aus den Merkmalen der auswählten Merkmalsuntermenge ein multi-dimensionaler Referenzmerkmalsvektor gebildet wird, mit dem ein in der Ausführungsphase ermittelter multi-dimensionaler aktueller Merkmalsvektor zur Ereigniserkennung verglichen wird.

7. Verfahren nach Anspruch 6, **dadurch gekennzeichnet, dass** in der Konfigurationsphase für eine Mehrzahl zu erkennender Ereignisse mehrere multi-dimensionale Referenzmerkmalsvektoren gebildet werden.

8. Verfahren nach Anspruch 6 oder 7, **dadurch gekennzeichnet, dass** die Ausführungsphase die Merkmale umfasst:
- Bereitstellen der in der Konfigurationsphase ermittelten Referenzmerkmalsvektoren,
- Bereitstellen von Informationen zu einer in der Konfigurationsphase getroffenen Merkmalsauswahl,
- zu einem aktuell zu erkennenden Ereignis Bestimmen lediglich von Merkmalen an allen oder einigen der Sensorknoten (1-6), die zu der getroffenen Merkmalsauswahl gehören,
- Darstellen dieser Merkmale als multi-dimensionalen aktuellen Merkmalsvektor, und
- Vornahme einer Klassifikation durch Vergleichen des aktuellen Merkmalsvektors mit den Referenzmerkmalsvektoren.

9. Verfahren nach einem der vorangehenden Ansprüche, **dadurch gekennzeichnet, dass** in die Sensorknoten (1-6) nach Abschluss der Konfigurationsphase Informationen über die Menge der Merkmale übertragen werden, die unabhängig von der relativen Lage der Netzknoten in den Referenzmerkmalsvektoren verwendet werden, und die übrigen Merkmalen in den Netzknoten weder berechnet noch verschickt werden.

10. Verfahren nach einem der vorangehenden Ansprüche, **dadurch gekennzeichnet, dass** in die Sensorknoten (1-6) nach Abschluss der Konfigurationsphase des Weiteren Informationen übertragen werden, die für jeden im Referenzvektor vertretenen Sensorknoten (1-6) eine von der relativen Lage des Sensorknoten (1-6) abhängige Projektion vom Merkmalsvektorraum in den Referenzmerkmalsvektorraum betreffen.

11. Sensornetz mit einer Mehrzahl von Sensorknoten (1-6), wobei das Sensornetz zur Durchführung einer Konfigurationsphase und zur Durchführung einer Ausführungsphase konfigurierbar ist, wobei in der Konfigurationsphase das Sensornetz dazu konfiguriert ist,
- eine Menge (120) von Merkmalen durch die Sensorknoten (1-6) des Sensornetzes bereitzustellen, die ein zu erkennendes Ereignis charakterisieren, zusammen mit topologischen Informationen hinsichtlich der Position der einzelnen Sensorknoten (1-6) im Sensornetz, und
- eine Untermenge aus der Menge (120) der Merkmale auszuwählen, wobei die Auswahl unter Berücksichtigung der genannten topologischen Informationen hinsichtlich der Position der einzelnen Sensorknoten (1-6) im Sensornetz erfolgt, indem die Auswahl eine Gewichtung dahingehend umfasst, dass solche Merkmale der Menge (120) der Merkmale stärker gewichtet werden, die von einem Sensorknoten (1-6) stammen, der bereits andere Merkmale zur Auswahl beigesteuert hat, wobei zu der ausgewählten Untermenge durch eine reduzierte Anzahl von Sensorknoten (1-6) Merkmale bereitgestellt werden,
und wobei in der Ausführungsphase das Sensornetz dazu konfiguriert ist,
- eine Ereigniserkennung zu einem aktuell zu erkennenden Ereignis auf der Grundlage von Merkmalen vorzunehmen, die zu einer ausgewählten Untermenge gehören.

12. Sensornetz nach Anspruch 11, **gekennzeichnet durch** eine zentrale Systemkomponente (10), die die Untermenge aus der Gesamtmenge (120) der bestimmten Merkmale auswählt.

13. Sensornetz nach Anspruch 11 oder 12, **dadurch gekennzeichnet, dass** das Sensornetz dazu konfiguriert ist, eine Untermenge durch Vornahme einer Gewichtung dahingehend auszuwählen, dass solche Merkmale der Gesamtmenge der bestimmten Merkmalen stärker gewichtet werden, die auch von anderen Netzknoten (1-6) ermittelt sind.

14. Sensornetz nach einem der Ansprüche 11 bis 13, **dadurch gekennzeichnet, dass** das Sensornetz dazu konfiguriert ist, bei der Auswahl einer Untermenge zu berücksichtigen, wie viele Merkmale ein Sensorknoten (1-6) in einer bestimmten relativen Lage zum Ort des Ereignisses bereits zur Erkennung beigesteuert hat.

15. Computerprogramm mit Programmcode zur Durchführung des Verfahrens nach einem der Ansprüche 1 bis 10, wenn das Computerprogramm auf einem Computer ausgeführt wird.

## Claims

1. A method for attribute selection for an event recognition in sensor networks, with the following steps:
- in a configuration phase,
o providing a quantity (120) of attributes by sensor nodes (1-6) of a sensor network that characterize an event to be recognized, together with topological information regarding the position of the individual sensor nodes (1-6) in the sensor network, and
o selecting (130) a sub-quantity from the quantity (120) of attributes, wherein the selection occurs taking into account said topological information regarding the position of the individual sensor nodes (1-6) in the sensor network, wherein the selection comprises a weighting to that effect that such attributes of the quantity (120) of attributes which originate from a sensor node (1-6) which already has contributed other attributes to the selection are weighted more strongly, wherein attributes are provided to the selected sub-quantity by a reduced number of sensor nodes (1-6),
- in an execution phase,
o conducting an event recognition for an event currently to be recognized on the basis of attributes that belong to a selected sub-quantity.

2. The method according to claim 1, **characterized in that** selecting (130) a sub-quantity comprises conducting a weighting to that effect that such attributes of the total quantity of the determined attributes, in which corresponding attributes are also identified by other network nodes (1-6), are weighted more strongly.

3. The method according to claim 1 or 2, **characterized in that** in the selection of a sub-quantity it is taken into account how many attributes a sensor node (1-6) in a specific location relative to the place of the event has already contributed to the recognition.

4. The method according to any of the preceding claims, **characterized in that** selecting (130) a sub-quantity comprises carrying out an iterative selection process on the total quantity of the determined attributes.

5. The method according to any of the preceding claims, **characterized in that** providing a quantity (120) of attributes which characterize an event to be recognized comprises the following steps within the configuration phase:
- providing a plurality of sensor nodes (1-6) of the sensor network,
- executing an event to be recognized,
- capturing measurement values (130) that are triggered by the event to be recognized on each of the sensor nodes (1-6),
- determining a plurality of attributes that characterize the event from the measurement values on each of the sensor nodes (1-6),
- forming the quantity (120) of attributes that characterize an event an event to be recognized from the sum of the attributes determined at the sensor nodes (1-6).

6. The method according to any of the preceding claims, **characterized in that** in the configuration phase a multi-dimensional reference attribute vector is formed from the attributes of the selected attribute sub-quantity, with which multi-dimensional reference attribute vector a current multi-dimensional attribute vector identified in the execution phase is compared for the event recognition.

7. The method according to claim 6, **characterized in that** in the configuration phase several multi-dimensional reference attribute vectors are formed for a plurality of events to be recognized.

8. The method according to claim 6 or 7, **characterized in that** the execution phase comprises the following attributes:
- providing the reference attribute vectors identified in the configuration phase,
- providing information to an attribute selection made in the configuration phase,
- determining merely attributes on all or some of the sensor nodes (1-6) which belong to the made attribute selection for an event currently to be recognized,
- display these attributes as current multi-dimensional attribute vector, and
- conducting a classification by comparing the current attribute vector with the reference attribute vectors.

9. The method according to any of the preceding claims, **characterized in that** information about the quantity of attributes are transmitted in the sensor nodes (1-6) after completion of the configuration phase, which information is used in the reference attribute vectors independently of the relative location of the network nodes, and the other attributes in the network nodes are neither calculated nor sent.

10. The method according to any of the preceding claims, **characterized in that** after completion of the configuration phase furthermore information is transmitted in the sensor nodes (1-6), which information relates to a projection depending on the relative location of the sensor node (1-6) from the attribute vector space in the reference attribute vector space for each sensor node (1-6) represented in the reference vector.

11. A Sensor network having a plurality of sensor nodes (1-6), wherein the sensor network is configurable for carrying out a configuration phase and for carrying out an execution phase, wherein in the configuration phase the sensor network is configured
- to provide a quantity (120) of attributes which characterize an event to be recognized by the sensor nodes (1-6) of the sensor network, together with topological information regarding the position of the individual sensor nodes (1-6) in the sensor network, and
- to select a sub-quantity of the quantity (120) of the attributes, wherein the selection occurs under consideration of said topological information regarding the position of the individual sensor nodes (1-6) in the sensor network, in that the selection comprises a weighting to that effect that such attributes of the quantity (120) of attributes which originate from a sensor node (1-6) which already has contributed other attributes to the selection are weighted more strongly, wherein attributes are provided to the selected sub-quantity by a reduced number of sensor nodes (1-6),
and wherein in the execution phase the sensor network is configured
- to conduct an event recognition for an event currently to be recognized on the basis of attributes that belong to a selected sub-quantity.

12. The sensor network according to claim 11, **characterized by** a central system component (10) that selects the sub-quantity out of the total quantity (120) of the determined attributes.

13. The sensor network according to claim 11 or 12, **characterized in that** the sensor network is configured to select a sub-quantity by conducting a weighting to that effect that such attributes of the total quantity of the determined attributes that are also identified by other network nodes (1-6), are weighted more strongly.

14. The sensor network according to any of claims 11 to 13, **characterized in that** the sensor network is configured to take into account during the selection of a sub-quantity how many attributes a sensor node (1-6) in a specific location relative to the place of the event has already contributed to the recognition.

15. A computer program with program code for carrying out the method according to any of claims 1 to 10, when the computer program is executed on a computer.

## Revendications

1. Procédé servant à sélectionner des caractéristiques pour identifier des événements dans des réseaux de capteurs, comprenant les étapes suivantes consistant à :
- lors d'une phase de configuration :
-- fournir un ensemble (120) de caractéristiques grâce à des noeuds de capteur (1-6) d'un réseau de capteurs, lesquelles caractérisent un événement devant être identifié, conjointement avec des informations topologiques concernant la position des divers noeuds de capteur (1-6) dans le réseau de capteurs, et
-- sélectionner (130) un sous-ensemble parmi l'ensemble (120) des caractéristiques, sachant que la sélection se fait en tenant compte des informations topologiques évoquées concernant la position des divers noeuds de capteur (1-6) dans le réseau de capteurs, dans lequel la sélection comprend une pondération de manière à ce que lesdites caractéristiques de l'ensemble (120) des caractéristiques qui proviennent d'un noeud de capteur (1-6) ayant déjà fourni aux fins de la sélection d'autres caractéristiques, soient plus fortement pondérées, dans lequel, pour obtenir le sous-ensemble sélectionné, des caractéristiques sont fournies par un nombre réduit de noeuds de capteur (1-6) ;
- lors d'une phase d'exécution :
-- effectuer une identification d'événement concernant un événement devant être identifié dans l'instant sur la base des caractéristiques relevant d'un sous-ensemble sélectionné.

2. Procédé selon la revendication 1, **caractérisé en ce que** la sélection (130) d'un sous-ensemble comprend la réalisation d'une pondération de manière à ce que lesdites caractéristiques de la quantité globale des caractéristiques définies pour lesquelles des caractéristiques correspondantes sont déterminées également par d'autres noeuds de réseau (1-6), soient plus fortement pondérées,.

3. Procédé selon la revendication 1 ou 2, **caractérisé en ce qu'**on tient compte, lors de la sélection du sous-ensemble, de la quantité de caractéristiques qu'un noeud de capteur (1-6) a fournie dans une position relative définie par rapport au lieu de l'événement aux fins déjà de l'identification.

4. Procédé selon l'une quelconque des revendications précédentes, **caractérisé en ce que** la sélection (130) d'un sous-ensemble comprend l'exécution d'un processus de sélection itératif sur l'ensemble global des caractéristiques définies.

5. Procédé selon l'une quelconque des revendications précédentes, **caractérisé en ce que** la fourniture d'ne quantité (120) de caractéristiques caractérisant un événement devant être identifié comprend, dans le cadre de la phase de configuration, les étapes suivantes consistant à :
- fournir une pluralité de noeuds de capteur (1-6) du réseau de capteurs ;
- exécuter un événement devant être identifié ;
- détecter des valeurs de mesure (130), au niveau de chacun des noeuds de capteur (1-6), qui sont déclenchées par l'événement devant être identifié ;
- définir, au niveau de chacun des noeuds de capteur (1-6), à partir des valeurs de mesure, une pluralité de caractéristiques caractérisant l'événement ;
- constituer la quantité (120) de caractéristiques caractérisant un événement devant être identifié à partir de la somme des caractéristiques définies au niveau des noeuds de capteur (1-6).

6. Procédé selon l'une quelconque des revendications précédentes, **caractérisé en ce que**, lors de la phase de configuration, un vecteur de caractéristiques de référence multidimensionnel est constitué à partir des caractéristiques du sous-ensemble sélectionné de caractéristiques, auquel est comparé un vecteur de caractéristiques de l'instant multidimensionnel déterminé lors de la phase d'exécution aux fins de l'identification d'événement.

7. Procédé selon la revendication 6, **caractérisé en ce que** plusieurs vecteurs de caractéristiques de référence multidimensionnels sont constitués lors de la phase de configuration pour une pluralité d'événements devant être identifiés.

8. Procédé selon la revendication 6 ou 7, **caractérisé en ce que** la phase d'exécution comprend les caractéristiques :
- fournir les vecteurs de caractéristiques de référence déterminés lors de la phase de configuration ;
- fournir des informations concernant une sélection de caractéristiques effectuée lors de la phase de configuration ;
- pour un événement devant être identifié dans l'instant, définir uniquement des caractéristiques au niveau de tous les noeuds de capteur ou de quelques noeuds de capteur (1-6) relevant de la sélection de caractéristiques effectuée ;
- représenter lesdites caractéristiques sous la forme d'un vecteur de caractéristiques multidimensionnel dans l' instant ; et
- effectuer une classification en comparant le vecteur de caractéristiques dans l'instant aux vecteurs de caractéristiques de référence.

9. Procédé selon l'une quelconque des revendications précédentes, **caractérisé en ce que** des informations concernant la quantité de caractéristiques sont transférées dans les noeuds de capteur (1-6), à l'issue de la phase de configuration, lesquelles informations sont utilisées dans les vecteurs de caractéristiques de référence indépendamment de la position relative des noeuds de réseau, et **en ce que** les caractéristiques restantes dans les noeuds de réseau ne sont ni calculées ni envoyées.

10. Procédé selon l'une quelconque des revendications précédentes, **caractérisé en ce que** sont transférées en outre dans les noeuds de capteur (1-6), à l'issue de la phase de configuration, des informations qui concernent pour chaque noeud de capteur (1-6) représenté dans le vecteur de référence, une projection de l'espace de vecteur de caractéristiques dans l'espace de vecteur de caractéristiques de référence, laquelle projection dépend de la position relative du noeud de capteur (1-6).

11. Réseau de capteurs comprenant une pluralité de noeuds de capteur (1-6), dans lequel le réseau de capteurs est configurable pour mettre en oeuvre une phase de configuration et pour mettre en oeuvre une phase d'exécution, dans lequel, lors de la phase de configuration, le réseau de capteurs est configuré afin
- de fournir un ensemble (120) de caractéristiques grâce aux noeuds de capteur (1-6) du réseau de capteurs, lesquelles caractéristiques caractérisent un événement devant être identifié, conjointement avec des informations topologiques concernant la position des divers noeuds de capteur (1-6) dans le réseau de capteurs, et
- de sélectionner un sous-ensemble parmi l'ensemble (120) des caractéristiques, dans lequel la sélection se fait en tenant compte des informations topologiques évoquées concernant la position des divers noeuds de capteur (1-6) dans le réseau de capteurs, en ce que la sélection comprenant une pondération de manière à ce que lesdites caractéristiques de l'ensemble (120) des caractéristiques provenant d'un noeud de capteur (1-6) ayant déjà fourni d'autres caractéristiques aux fins de la sélection, soient plus fortement pondérées, dans lequel, pour obtenir le sous-ensemble sélectionné, des caractéristiques sont fournies par un nombre réduit de noeuds de capteur (1-6),
et dans lequel le réseau de capteurs est configuré lors de la phase d'exécution afin
- d'effectuer, pour un événement devant être identifié dans l'instant, une identification d'événement sur la base de caractéristiques relevant d'un sous-ensemble sélectionné.

12. Réseau de capteurs selon la revendication 11, **caractérisé par** une composante de système (10) centrale, qui sélectionne la sous-quantité parmi la quantité globale (120) des caractéristiques définies.

13. Réseau de capteurs selon la revendication 11 ou 12, **caractérisé en ce que** le réseau de capteurs est configuré pour sélectionner un sous-ensemble en réalisant une pondération telle que de telles caractéristiques de la quantité globale des caractéristiques définies, lesquelles sont déterminées également par d'autres noeuds de réseau (1-6), sont plus fortement pondérées.

14. Réseau de capteurs selon l'une quelconque des revendications 11 à 13, **caractérisé en ce que** le réseau de capteurs est configuré afin de tenir compte lors de la sélection d'un sous-ensemble de l'ensemble de caractéristiques qu'un noeud de capteur (1-6) a fournie dans une position relative définie par rapport au lieu de l'événement aux fins de l'identification.

15. Programme informatique comprenant un code de programme servant à mettre en oeuvre le procédé selon l'une quelconque des revendications 1 à 10, lorsque le programme informatique est exécuté sur un ordinateur.
